# EUROPÄISCHE PATENTSCHRIFT

(11) **EP 1 625 976 B1**
(45) Veröffentlichungstag und Bekanntmachung des Hinweises auf die Patenterteilung: **11.11.2009**
(21) Anmeldenummer: 05105297.5
(22) Anmeldetag: 16.06.2005
(51) Int. Cl.: B60R 11/04

(54) **Bildaufnahmesystem**
Image pickup system
Sytème d'acquisition d'image

(30) Priorität: 14.08.2004 DE 102004039464
(43) Veröffentlichungstag der Anmeldung: 15.02.2006
(73) Patentinhaber: Robert Bosch GmbH, 70442 Stuttgart (DE)
(72) Erfinder: Gottwald, Frank, 71287, Weissach (DE); Luhr, Volker, 71640, Ludwigbsurg (DE)

(56) Entgegenhaltungen:
- DE-A1- 10 237 554
- US-A1- 2003 059 217
- US-A1- 2004 032 668
- US-B1- 6 170 955

## Beschreibung

### Stand der Technik

Die Erfindung betrifft ein Kraftfahrzeug mit einem Bildaufnahmesystem nach dem Oberbegriff des Anspruchs 1.
Bildaufnahmesysteme der gattungsgemäßen Art sind für die Anwendung in Kraftfahrzeugen vorgesehen. Für diese Anwendung werden eine robuste Konstruktion, eine große Genauigkeit und eine große Wartungsfreundlichkeit erwünscht. Andererseits müssen diese Bildaufnahmesysteme in ihrer Preisgestaltung auch für den Großserieneinsatz attraktiv sein. Neben der notwendigen exakten mechanischen und optischen Justierung des Bildaufnahmesystems ist eine einfache Wartung gefordert, die auch die Reinigung einer verschmutzten Windschutzscheibe ermöglicht. Mit Bildaufnahmesystemen, die fest mit der Windschutzscheibe verklebt sind, lassen sich diese Forderungen nicht ohne weiteres erfüllen. Zum einen kann eingedrungene Feuchtigkeit kondensieren und die Sicht des Bildaufnahmesystems behindern. Zum anderen wird die Klebeverbindung zwischen dem Bildaufnahmesystem und der Windschutzscheibe durch die im Betrieb des Fahrzeugs auftretenden Temperaturwechselbeanspruchungen stark belastet und die Klebeverbindung bereits nach relativ kurzer Zeit beschädigt. Durch die beschädigte Klebeverbindung dringen Schmutzpartikel ein und schlagen sich auf der Windschutzscheibe und optischen Grenzflächen des Bildaufnahmesystems nieder ohne dass sie leicht entfernt werden könnten. Auf Dauer stellt sich somit eine starke Sichtbehinderung des Bildaufnahmesystems ein, die dessen Zuverlässigkeit stark beeinträchtigt.

Aus DE 198 57 113 A1 ist die Verwendung einer Digitalkamera oder eines Camcorders mit zumindest einer Sensor- oder Prozessoreinheit, einer Energie- und Datenspeicheeinheit und einer Datenschnittstelle in einem Fahrzeug bekannt, wobei Digitalkamera oder Camcorder im Fahrgastraum eines Fahrzeugs in eine Montageeinrichtung ein- und ausbaubar sind. Die Digitalkamera oder der Camcorder werden als Bildverarbeitungssystem im Fahrzeug oder mit einem im Fahrzeug installierten Bildverarbeitungssystem genutzt. Digitalkamera und Camcorder können darüber hinaus unabhängig von dem Fahrzeug zur Bildaufnahme eingesetzt werden. Über die Montageeinrichtung sind keine Einzelheiten offenbart.

Aus US 5 246 193 A1 ist eine Montageeinrichtung für eine Kamera bekannt. Diese Montageeinrichtung umfasst eine Halterung für die Kamera, die mittels Saugnäpfen an der Windschutzscheibe des Fahrzeugs befestigt wird. Mit einer derartigen Halterung lässt sich keine hohen Genauigkeitsanforderungen genügende Montage einer Kamera realisieren.

Die US 2003/0059217 A1 offenbart ein Gerät zur Aufnahme eines Verkehrsunfalls für ein Kraftfahrzeug, wobei das Gerät eine Kamera und eine Befestigungsvorrichtung für die Kamera, umfasst. Aus der US 2004/0011835 A1 ist eine Sonnenblende für ein Kraftfahrzeug bekannt, wobei die Sonnenblende eine Vielzahl an Bürogeräte umfasst.

### Vorteile der Erfindung

Das erfindungsgemäße Kraftfahrzeug mit einem Bildaufnahmesystem mit den Merkmalen des Anspruchs 1 vermeidet diese Nachteile, indem es eine leichte Wartbarkeit des Bildaufnahmesystems vorsieht. Dies wird dadurch erreicht, dass das Bildaufnahmesystem für Wartungszwecke leicht abnehmbar konstruiert ist. Für die Halterung des Bildaufnahmesystems ist ein fahrzeugfest angeordneter Halterahmen vorgesehen, der vorzugsweise fest mit der Windschutzscheibe des Fahrzeugs verbunden ist. Diese feste Verbindung kann zweckmäßig durch eine Klebeverbindung bewirkt werden. Für die Montage im Fahrzeug wird das Bildaufnahmesystem leicht abnehmbar mechanisch mit diesem Halterahmen verbunden. In einer besonders vorteilhaften Ausführungsvariante ist das Bildaufnahmesystem an den fahrzeugfest installierten Halterahmen angelenkt und für Wartungszwecke leicht abklappbar. Praktische Erfahrungen mit herkömmlichen Bildaufnahmesystemen haben gezeigt, dass mit der erfindungsgemäßen Lösung alle bestehenden Forderungen an ein derartiges Bildaufnahmesystem kostengünstig erfüllbar sind. Durch den fahrzeugfest angeordneten, mechanisch extrem stabil ausgeführten Halterahmen ist eine mechanisch sichere Verbindung des Bildaufnahmesystems möglich, die auch höchsten optischen Genauigkeitsanforderungen entspricht. Auch durch wiederholte Demontage und Montage des Bildaufnahmesystems konnte keine Veränderung der konstruktiv festgelegten optischen Achse oder Blickrichtung des Bildaufnahmesystems festgestellt werden. Dadurch dass sich das Bildaufnahmesystem im Bedarfsfall ohne weiteres leicht von dem fahrzeugfest angeordneten Halterahmen abnehmen oder abklappen lässt, ist die Windschutzscheibe in dem Sichtbereich des Bildaufnahmesystems leicht zugänglich und kann somit regelmäßig gereinigt werden. Durch regelmäßige Wartung kann somit einer optischen Degradation des Bildaufnahmesystems durch niedergeschlagene Schmutzpartikel auf der Windschutzscheibe des Fahrzeugs und/oder optischen Grenzflächen des Bildaufnahmesystems wirkungsvoll begegnet werden.

### Zeichnung

Ausführungsbeispiele der Erfindung werden nachfolgend unter Bezug auf die Zeichnung näher beschrieben. Dabei zeigt
- Figur 1: das Bildaufnahmesystem in Betriebslage,
- Figur 2: das Bildaufnahmesystem in Wartungslage,
- Figur 3: eine perspektivische Ansicht eines Halterahmens für ein optisches Modul des Bildaufnahmesystems,
- Figur 4: eine Ansicht auf den Gehäuseboden des optischen Moduls.

### Beschreibung der Ausführungsbeispiele

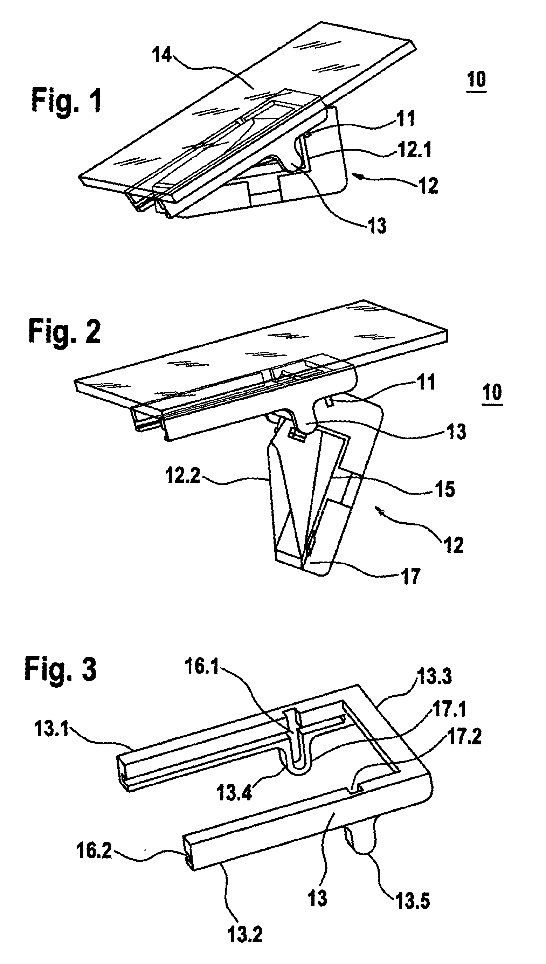

Figur 1 zeigt, in einer schematischen Darstellung, das Bildaufnahmesystem 10 in Betriebslage, bei der im Einzelnen nicht näher dargestellte optische Komponenten des Bildaufnahmesystems 10, wie insbesondere ein Bildsensor und ein mit diesem Bildsensor in Wirkverbindung stehendes optisches System, durch die Windschutzscheibe 14 eines nicht dargestellten Fahrzeugs in Fahrtrichtung des Fahrzeugs blicken, um eine in dem Erfassungsbereich des Bildsensors liegende Szene aufzunehmen. Das Bildaufnahmesystem 10 umfasst einen fahrzeugfest angeordneten Halterahmen 13. Der Halterahmen 3 ist, vorzugsweise außerhalb des Sichtfeldes des Fahrers, an der Innenseite der Windschutzscheibe 14 des Fahrzeugs, vorzugsweise durch eine Klebeverbindung, befestigt. An dem Halterahmen 13 ist ein optisches Modul 12 befestigt. Das optische Modul 12 umfasst ein Gehäuse 12.1, in dem in der Zeichnung nicht detailliert dargestellte optische Komponenten des Bildaufnahmesystems 10, wie insbesondere ein Bildsensor und ein mit diesem Bildsensor zusammenwirkendes optisches System angeordnet sind. Als Bildsensor dient vorzugsweise ein CCD-Target (CCD = Charge Coupled Device)mit zugehöriger elektronischer Beschaltung. Als optisches System dient eine Linse oder eine Kombination von Linsen, die den Erfassungsbereich des Bildaufnahmesystems 10 auf den Bildsensor abbildet.
Für Wartungszwecke, insbesondere für die Reinigung einer ggf. nach längerer Betriebszeit verschmutzten Windschutzscheibe 14, wird das lösbar in dem Halterahmen 13 gehalterte optische Modul 12 aus dem Halterahmen 13 entfernt. Nach Entfernung des optischen Moduls 12 ist der in dem Bereich des Halterahmens 13 liegende Teil der Windschutzscheibe 14 für Reinigungszwecke leicht zugänglich und kann gesäubert werden. Nach erfolgter Reinigung wird das optische Modul 12 wieder in den Halterahmen 13 eingesetzt und in seine Betriebslage (Figur 1) gebracht. Eine besonders vorteilhafte und wartungsfreundliche Konstruktion des Bildaufnahmesystems 10 wird im Folgenden anhand von Figur 2 erläutert. Figur 2 zeigt das Bildaufnahmesystem 10 in einer Wartungsposition. In dieser Position ist, wie vorstehend schon erwähnt, der im Bereich des Halterahmens 13 liegende Teil der Windschutzscheibe 14 für Reinigungszwecke leicht zugänglich, da das optische Modul 12 nicht mehr eng an der Windschutzscheibe 14 anliegt. In dieser sehr vorteilhaften Konstruktion ist das optische Modul 12 einseitig an dem Halterahmen 13 angelenkt und kann demzufolge aus der in Figur 1 dargestellten Betriebslage in die in Figur 2 dargestellte Wartungsposition abgeklappt werden. In Figur 2 ist die mit Bezugsziffer 12.2 bezeichnete Streulichtblende erkennbar, die in der in Figur 1 dargestellten Betriebslage des Bildaufnahmesystems 10 auf der Innenseite der Windschutzscheibe 14 aufliegt und die optischen Komponenten des optischen Moduls 12 gegen Streulicht abschirmt.

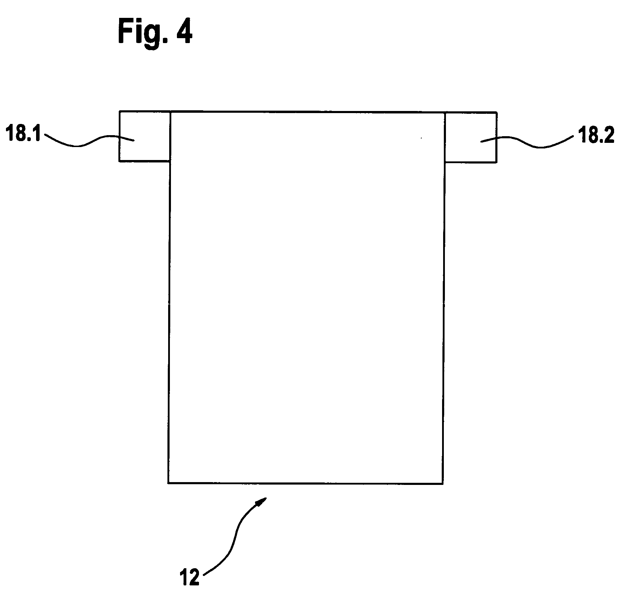

In Figur 3 der Zeichnung ist eine besonders vorteilhafte Ausgestaltung des Halterahmens 13 dargestellt. Der Halterahmen 13 besteht im Wesentlichen aus einem U-förmigen Profil mit zwei parallel zueinander ausgerichteten Schenkeln 13.1 und 13.2, die durch eine Brücke 13.3 miteinander verbunden sind. Die der Windschutzscheibe 14 zugewandten Kanten des Rahmens 13 liegen im Wesentlichen in einer Ebene, um einen guten Kontakt mit der W8indschutzscheibe 14 zu gewährleisten. Sollte die Windschutzscheibe 14 in dem Befestigungsbereich des Rahmens 13 jedoch gekrümmt sein, können die Konturen des Rahmens 13 an die Krümmung der Windschutzscheibe 14 entsprechend angepasst werden. Auf der der Windschutzscheibe 14 abgewandte Außenkanten tragen beide Schenkel 13.1, 13.2 je einen Fortsatz 13.4, 13.5, die sich vorzugsweise senkrecht zu der Ebene der Windschutzscheibe 14 erstrecken. In die Innenseiten der Schenkel 13.1, 13.2 des Halterahmens 13 sind Führungsnuten 16.1, 16.2 eingebracht. Diese Führungsnuten 16.1,16.2 sind zur Grundfläche der Schenkel 13.1,13.2 hin geöffnet und erstrecken sich bis fast zu der die Schenkel 13.1,13.2 verbindenden Brücke 13.3. Auch in die Innenseite der Fortsätze 13.4,13.5 sind Führungsnuten 17.1,17.2 eingebracht, die vorzugsweise senkrecht zu den in den Schenkeln 13.1,13.2 angeordneten Führungsnuten 16.1,16.2 gerichtet sind, und die sich mit diesen Führungsnuten 16.1,16.2 in dem Bereich der Fortsätze 13.4,13.5 kreuzen. Der Querschnitt der Führungsnuten 13.1, 13.2 kann zweckmäßig quadratisch oder rechteckig gewählt werden. Besonders gute Führungseigenschaften lassen sich bekanntlich auch mit Führungsnuten erzielen, die einen schwalbenschwanzförmigen Querschnitt aufweisen. Die Führungsnuten 13.1,13.2 in dem Halterahmen 13 dienen der Führung und Halterung des optischen Moduls 12. Der dem Halterahmen 13 zugewandte Boden des optischen Moduls 12 verfügt zu diesem Zweck über Führungsmittel 18.1,18.2 (Figur 4), die in die Führungsnuten 13.1,13.2 eingehakt und entlang der Führungsnuten 13.1,13.2 bewegt werden können.
Im Folgenden werden die Montage und Demontage des Bildaufnahmesystems 1 kurz beschrieben. Der Halterahmen 13 wird dauerhaft fahrzeugfest montiert. Vorzugsweise wird er durch eine Klebeverbindung mit der Innenseite der Windschutzscheibe verbunden. Das optische Modul 12 des Bildaufnahmesystems 1 wird mittels seiner Führungsmittel 18.1,18.2 in die Führungsnuten 16.1,16.2 der Schenkel 13.1,13.2 des Halterahmens 13 eingehängt und entlang der Führungsnuten 16.1,16.2 bis zu einem Anschlag fortbewegt. Der Anschlag kann durch das Ende der Führungsnuten kurz vor dem Bereich der die beiden Schenkel 13.1,13.2 verbindenden Brücke 13.3 vorgegeben sein. Alternativ kann in wenigstens einem der Schenkel 13.1,13.2 des Halterahmens ein in seiner Einschraubtiefe verstellbarer Gewindestift 11 (siehe Figur 1, Figur 2)eingebracht sein, mit dem das optische Modul 12 in seiner Endlage fixierbar ist. Alternativ können Feder- oder Rastmittel vorgesehen sein, die das optische Modul 12 in seiner Endlage halten und sichern. In dieser Endlage liegt auch die Streulichtblende 12.2 eng an der Windschutzscheibe 14 an und verhindert so den Zutritt störenden Streulichts zu dem optischen Modul 12. Für Wartungsarbeiten, insbesondere das Reinigen der Windschutzscheibe vor dem optischen Modul 12, wird das optische Modul 12 zunächst entsperrt, indem die Feder- oder Rastmittel bzw. der Gewindestift 11 gelöst werden. Anschließend wird das optische Modul 12 entlang der Führungsnuten 13.1,13.2 zurückbewegt, bis der Kreuzungsbereich der Führungsnuten 13.1,13.2 mit den Führungsnuten 17.1,17.2 erreicht ist. Jetzt tauchen die Führungsmittel 18.1,18.2 des optischen Moduls 12 in die Führungsnuten 17.1,17.2 ein und gelangen in ihre Endposition am Ende dieser Führungsnuten. In dieser Position ist das optische Modul 12 mit seinen Führungsmitteln 18.1, 18.2 in den Fortsätzen 13.4,13.5 drehbeweglich gelagert und kann so, weiterhin an dem Halterahmen 13 hängend, zum Zwecke der Reinigung der Windschutzscheibe abgeklappt werden. Nach Beendigung des Reinigungsvorgangs wird das optische Modul 12 in umgekehrte Richtung wieder in seine Betriebslage (siehe Figur 1) gebracht.

In einer vereinfachten Ausführungsvariante der Erfindung umfasst der Halterahmen 13 lediglich Schenkel 13.1,13.2 mit Führungsnuten 16.1,16.2. für die Lagerung eines optischen Moduls 12, das mit seinen Führungsmitteln 18.1,18.2 in diese Führungsnuten 16.1,16.2 eingesetzt wird. Für Wartungs- insbesondere Reinigungszwecke wird das optische Modul 12 vollständig von dem Halerahmen 13 getrennt.
In einer weiteren Ausführungsvariante der Erfindung ist das optische Modul 12 mit einem ggf. trennbaren Scharnier einseitig an einen Halterahmen 13 angelenkt und kann in eine Betriebslage oder eine Wartungsposition verschwenkt werden. In der Betriebslage kann das optische Modul 12 zweckmäßig durch Rastmittel gesichert werden.
Selbstverständlich sind weitere konstruktive Varianten einer lösbaren Verbindung des optischen Moduls mit dem Halterahmen möglich, die ein Fachmann im Bedarfsfall wählen könnte, jedoch ohne die erfinderische Lösung zu verlassen.

## Patentansprüche

1. Kraftfahrzeug mit einem Bildaufnahmesystem (10), welches einen Halterahmen (13) und einen mit dem Halterahmen (13) lösbar verbindbares optisches Modul (12) umfasst, wobei das optische Modul (12) an den fahrzeugfest installierten Halterahmen (13) derart angelenkt ist, dass das optische Modul (12) weiterhin an dem Halterahmen (13) hängend abklappbar ist, **dadurch gekennzeichnet, dass** das optische Modul (12) in Betriebslage durch eine Windschutzscheibe (14) des Kraftfahrzeugs in Fahrtrichtung des Kraftfahrzeugs blickt und dass das optische Modul (12) aus der Betriebslage in eine Wartungsposition abklappbar ist.

2. Kraftfahrzeug nach Anspruch 1, **dadurch gekennzeichnet, dass** der Halterahmen (13) mit der Windschutzscheibe (14) des Kraftfahrzeugs durch eine Klebeverbindung verbindbar ist.

3. Kraftfahrzeug nach einem der vorhergehenden Ansprüche, **dadurch gekennzeichnet, dass** der Halterahmen (13) im Wesentlichen U-förmig ausgebildet ist.

4. Kraftfahrzeug nach einem der vorhergehenden Ansprüche, **dadurch gekennzeichnet, dass** der Halterahmen (13) zwei durch eine Brücke (13.3) verbundene Schenkel (13.1, 13.2) umfasst.

5. Kraftfahrzeug nach einem der vorhergehenden Ansprüche, **dadurch gekennzeichnet, dass** in die Schenkel (13.1, 13.2) Führungsnuten (16.1, 16.2) eingebracht sind.

6. Kraftfahrzeug nach einem der vorhergehenden Ansprüche, **dadurch gekennzeichnet, dass** die Führungsnuten (16.1, 16.2) einen quadratischen oder rechteckigen Querschnitt haben.

7. Kraftfahrzeug nach einem der vorhergehenden Ansprüche, **dadurch gekennzeichnet, dass** die Schenkel (13.1, 13.2) aus der Ebene der Schenkel hervorspringende Fortsätze (13.4, 13.5) tragen.

8. Kraftfahrzeug nach einem der vorhergehenden Ansprüche, **dadurch gekennzeichnet, dass** in die Fortsätze (13.4, 13.5) Führungsnuten (17.1, 17.2) eingebracht sind.

9. Kraftfahrzeug nach einem der vorhergehenden Ansprüche, **dadurch gekennzeichnet, dass** die Führungsnuten (17.1, 17.2) einen Kreuzungsbereich mit den Führungsnuten (16.1, 16.2) aufweisen.

10. Kraftfahrzeug nach einem der vorhergehenden Ansprüche, **dadurch gekennzeichnet, dass** das optische Modul (12) ein Gehäuse (12.1) für die Aufnahme eines Bildsensors und eines mit dem Bildsensor in Wirkverbindung stehenden optischen Systems umfasst.

11. Kraftfahrzeug nach einem der vorhergehenden Ansprüche, **dadurch gekennzeichnet, dass** mit dem Gehäuse (12.1) des optischen Moduls (12) eine Streulichtblende (12.2) verbunden ist.

12. Kraftfahrzeug nach einem der vorhergehenden Ansprüche, **dadurch gekennzeichnet, dass** die Streulichtblende (12.2) in Betriebslage des optischen Moduls (12) an der Innenseite der Windschutzscheibe (14) des Kraftfahrzeugs anliegt.

13. Kraftfahrzeug nach einem der vorhergehenden Ansprüche, **dadurch gekennzeichnet, dass** das optische Modul (12) Führungsmittel (18.1, 18.2) umfasst, die in die Führungsnuten (16.1, 16.2, 17.1, 17.2) des Halterahmens (13) einführbar sind.

14. Kraftfahrzeug nach einem der vorhergehenden Ansprüche, **dadurch gekennzeichnet, dass** das optische Modul (12) mittels eines lösbaren Scharniers an den Halterahmen anlenkbar ist.

15. Kraftfahrzeug nach einem der vorhergehenden Ansprüche, **dadurch gekennzeichnet, dass** das optische Modul (12) in seiner Betriebslage in dem Halterahmen (13), beispielsweise durch eine Rastverbindung, sicherbar ist.

## Claims

1. Motor vehicle having an image-recording system (10) which comprises a holding frame (13) and an optical module (12) which can be detachably connected to the holding frame (13), wherein the optical module (12) is coupled to the holding frame (13), secured to the vehicle, in such a way that the optical module (12) can also be folded down while being suspended from the holding frame (13), **characterized in that** in the operating position the optical module (12) looks through a windscreen (14) of the motor vehicle in the direction of travel of the motor vehicle, and **in that** the optical module (12) can be folded down from the operating position into a maintenance position.

2. Motor vehicle according to Claim 1, **characterized in that** the holding frame (13) can be connected to the windscreen (14) of the motor vehicle by means of a bonded connection.

3. Motor vehicle according to one of the preceding claims, **characterized in that** the holding frame (13) is of an essentially U-shaped design.

4. Motor vehicle according to one of the preceding claims, **characterized in that** the holding frame (13) comprises two limbs (13.1, 13.2) which can be connected by a bridge (13.3).

5. Motor vehicle according to one of the preceding claims, **characterized in that** guide grooves (16.1, 16.2) are formed in the limbs (13.1, 13.2).

6. Motor vehicle according to one of the preceding claims, **characterized in that** the guide grooves (16.1, 16.2) have a square or rectangular cross section.

7. Motor vehicle according to one of the preceding claims, **characterized in that** the limbs (13.1, 13.2) have projections (13.4, 13.5) which protrude from the plane of the limbs.

8. Motor vehicle according to one of the preceding claims, **characterized in that** guide grooves (17.1, 17.2) are formed in the projections (13.4, 13.5).

9. Motor vehicle according to one of the preceding claims, **characterized in that** the guide grooves (17.1, 17.2) have an area of intersection with the guide grooves (16.1, 16.2).

10. Motor vehicle according to one of the preceding claims, **characterized in that** the optical module (12) comprises a housing (12.1) for accommodating an image sensor and an optical system which is operatively connected to the image sensor.

11. Motor vehicle according to one of the preceding claims, **characterized in that** a scattered light aperture (12.2) is connected to the housing (12.1) of the optical module (12).

12. Motor vehicle according to one of the preceding claims, **characterized in that** in the operating position of the optical module (12) the scattered light aperture (12.2) is located against the inside of the windscreen (14) of the motor vehicle.

13. Motor vehicle according to one of the preceding claims, **characterized in that** the optical module (12) comprises guide means (18.1, 18.2) which can be introduced into the guide grooves (16.1, 16.2, 17.1, 17.2) of the holding frame (13).

14. Motor vehicle according to one of the preceding claims, **characterized in that** the optical module (12) can be coupled to the holding frame by means of a detachable hinge.

15. Motor vehicle according to one of the preceding claims, **characterized in that**, in its operating position, the optical module (12) can be secured in the holding frame (13) using, for example, a latched connection.

## Revendications

1. Véhicule automobile doté d'un système (10) d'enregistrement d'image qui comprend un cadre de support (13) et un module optique (12) qui peut être relié de manière libérable au cadre de support (13), le module optique (12) étant articulé sur le cadre de support (13) installé fixement sur le véhicule de telle sorte que le module optique (12) puisse de plus être suspendu de manière rabattable sur le cadre de support (13),
**caractérisé en ce que**
lorsque le module optique (12) est en position de fonctionnement, il regarde à travers le pare-brise (14) du véhicule automobile dans la direction d'avancement du véhicule automobile et
**en ce que** le module optique (12) peut être rabattu depuis la position de fonctionnement jusque dans une position d'attente.

2. Véhicule automobile selon la revendication 1, **caractérisé en ce que** le cadre de support (13) peut être relié au pare-brise (14) du véhicule automobile par une liaison collée.

3. Véhicule automobile selon l'une des revendications précédentes, **caractérisé en ce que** le cadre de support (13) a essentiellement la forme d'un U.

4. Véhicule automobile selon l'une des revendications précédentes, **caractérisé en ce que** le cadre de support (13) comprend deux branches (13.1, 13.2) reliées par une traverse (13.3).

5. Véhicule automobile selon l'une des revendications précédentes, **caractérisé en ce que** les branches (13.1, 13.2) sont placées dans des rainures de guidage (16.1, 16.2).

6. Véhicule automobile selon l'une des revendications précédentes, **caractérisé en ce que** les rainures de guidage (16.1, 16.2) ont une section transversale carrée ou rectangulaire.

7. Véhicule automobile selon l'une des revendications précédentes, **caractérisé en ce que** les branches (13.1, 13.2) portent des appendices (13.4, 13.5) qui débordent du plan des branches.

8. Véhicule automobile selon l'une des revendications précédentes, **caractérisé en ce que** des rainures de guidage (17.1, 17.2) sont ménagées dans les appendices (13.4, 13.5).

9. Véhicule automobile selon l'une des revendications précédentes, **caractérisé en ce que** les rainures de guidage (17.1, 17.2) présentent une zone de croisement avec les rainures de guidage (16.1, 16.2).

10. Véhicule automobile selon l'une des revendications précédentes, **caractérisé en ce que** le module optique (12) comprend un boîtier (12.1) qui reprend un détecteur d'image et un système optique qui coopère avec le détecteur d'image.

11. Véhicule automobile selon l'une des revendications précédentes, **caractérisé en ce qu'**un écran (12.2) contre la lumière diffuse est relié au boîtier (12.1) du module optique (12).

12. Véhicule automobile selon l'une des revendications précédentes, **caractérisé en ce que** l'écran (12.2) contre la lumière diffuse repose sur le côté intérieur du pare-brise (14) du véhicule automobile lorsque le module optique (12) est en position de fonctionnement.

13. Véhicule automobile selon l'une des revendications précédentes, **caractérisé en ce que** le module optique (12) comprend des moyens de guidage (18.1, 18.2) qui peuvent être insérés dans la rainure de guidage (16.1, 16.2, 17.1, 17.2) du cadre de support (13).

14. Véhicule automobile selon l'une des revendications précédentes, **caractérisé en ce que** le module optique (12) peut être articulé sur le cadre de support au moyen d'une charnière libérable.

15. Véhicule automobile selon l'une des revendications précédentes, **caractérisé en ce que** lorsque le module optique (12) est en position de fonctionnement, il peut être fixé dans le cadre de support (13), par exemple par une liaison encliquetable.
